**Europäisches Patentamt**

**European Patent Office**

**Office européen des brevets**

(19)

(11) Veröffentlichungsnummer: **0 175 997**
**B1**

(12)

# EUROPÄISCHE PATENTSCHRIFT

(45) Veröffentlichungstag der Patentschrift:
23.08.89

(51) Int. Cl.⁴: **G06F 9/34**, G06F 12/04

(21) Anmeldenummer: 85111428.0

(22) Anmeldetag: 10.09.85

(54) Schaltungsanordnung zur befehlstypabhängigen Berechnung von Operandenadressen und zur Prüfung der Seitengrenzenüberschreitung bei Operanden für logische oder dezimale Speicher-Speicherbefehle.

(30) Priorität: 13.09.84 DE 3433655

(43) Veröffentlichungstag der Anmeldung:
02.04.86 Patentblatt 86/14

(45) Bekanntmachung des Hinweises auf die Patenterteilung:
23.08.89 Patentblatt 89/34

(84) Benannte Vertragsstaaten:
AT BE CH DE FR GB IT LI NL SE

(56) Entgegenhaltungen:
EP-A- 0 075 893
DE-A- 3 215 062
US-A- 3 828 316

IBM TECHNICAL DISCLOSURE BULLETIN, Band 10, Nr. 1, Juni 1967, Seiten 31-33, New York, US; J.G. ADLER et al.: "Determination of completion of operand fetching"
COMPUTER, Band 7, Nr. 11, November 1974, Seiten 24-38, Long Beach, US; I. FLORES: "Lookahead control in the IBM system 370 model 165"

(73) Patentinhaber: Siemens Aktiengesellschaft, Wittelsbacherplatz 2, D-8000 München 2(DE)

(72) Erfinder: Köhler, Manfred, Dipl.-Ing., Eichenstrasse 4, D-8011 Putzbrunn(DE)

**Beschreibung**

Die Erfindung betrifft eine Schaltungsanordnung nach dem Oberbegriff des Patentanspruchs 1.

Der für die Verarbeitung im Zentralprozessor einer Datenverarbeitungsanlage aufwendigste Befehlstyp ist der sogenannte Speicher-Speicherbefehl (SS-Befehl), bei dem beide Operanden im Hauptspeicher stehen und bei dem außerdem die Länge der Operanden variabel ist. Bei diesem Befehlstyp wird ferner zwischen logischen und dezimalen SS-Befehlen unterschieden, wobei die Operandenverarbeitung bei logischen SS-Befehlen am linken Feldende (niedrigste Byteadresse) und bei dezimalen SS-Befehlen am rechten Feldende (höchste Byteadresse) beginnt. Das rechte Feldende wird dabei durch Aufaddition der Operandenlänge auf die im Befehl spezifizierte logische Adresse gewonnen.

Da bei SS-Befehlen beide Operanden im Hauptspeicher stehen, müssen pro Befehl und vor Befehlsausführung zwei "Logische" Operandenadressen wie folgt berechnet werden.

| Logische SS-Befehle: | | |
|---|---|---|
| Adresse 1: | $(B1) + D1$ | linkes Feldende |
| Adresse 2: | $(B2) + D2$ | linkes Feldende |
| Dezimale SS-Befehle: | | |
| Adresse 1: | $(B1) + D1 + L1$ | rechtes Feldende |
| Adresse 2: | $(B2) + D2 + L2$ | rechtes Feldende |
| Dabei bedeuten: | | |
| $(B1), (B2)$: | Basisadressen von Operand 1 und Operand 2 | |
| $D1, D2$: | Distanzadressen von Operand 1 und Operand 2 | |
| $L1, L2$: | Länge in Bytes $-1$ von Operand 1 und Operand 2 | |

Zusätzlich muß bei der Verarbeitung von SS-Befehlen überwacht werden, ob die Operandenfelder eine Seitengrenze im virtuellen Speicher überschreiten, d.h. ob Feldanfang und Feldende eines Operanden innerhalb einer Seite oder in benachbarten Seiten liegen. Bekanntlich sind die Speicher von kommerziellen Datenverarbeitungsanlagen üblicherweise in 2 KByte bzw. 4 KByte große Blöcke bzw. Seiten unterteilt. Liegt eine Seitenüberschreitung vor, so muß vor Beginn der eigentlichen Befehlsverarbeitung überprüft werden, ob für die beiden virtuellen Seiten je eine reelle Seite definiert ist und ob nicht Zugriffsbeschränkungen durch den SS-Befehl verletzt werden. Die Seitenüberschreitung kann auch gleichzeitig bei beiden Operanden auftreten. Besonders wichtig ist die schnelle und den Normalfall (keine Seitenüberschreitung) nicht belastende Erkennung des Sonderfalls "Seitenüberschreitung".

In Abhängigkeit von der Leistungsklasse der jeweiligen Datenverarbeitungsanlage haben sich verschiedene Lösungen für die Adreßrechnung und Seitengrenzenüberwachung herausgebildet.

Vorwiegend in der oberen Leistungsklasse finden sich aufwendige Drei-Operanden-Addierer für jeweils 24 bzw. 31 Bit breite Adreßkomponenten. Es gibt sowohl echte Drei-Operanden-Addierer mit drei parallelen Operandeneingängen als auch Adreßaddierer, die aus zwei hintereinander geschalteten Zwei-Operanden-Addierern bestehen. Alle bekannten Lösungen setzen das mehr oder minder gleichzeitige Vorhandensein aller drei Adreßkomponenten am Eingang des Addierers voraus. Dies ist hinsichtlich der Basis- und Indexadressen keineswegs trivial, weil diese zuvor aus dem Registersatz gelesen werden müssen. Ein Drei-Operanden-Addierer setzt deshalb sinnvollerweise einen Registersatz voraus, aus dem gleichzeitig zwei verschiedene Registerinhalte gelesen werden können. Dies bedeutet entweder eine Realisierung als Flipflop-Registersatz oder bei Realisierung mit RAM-Bausteinen eine Duplizierung des Registersatzes.

Bei nach dem Fließband-Prinzip arbeitenden Datenverarbeitungsanlagen, bei denen ein Befehlsaufbereitungsprozessor im Vorgriff und parallel zur Befehlsausführung das Befehlslesen, die Befehlsinterpretation, die Operandenadreßrechnung und das Lesen von Speicheroperanden durchführt, während ein Befehlsausführungsprozessor die eigentliche Befehlsausführung und die Abspeicherung der Ergebnisse im Registersatz oder im Puffer- bzw. Hauptspeicher übernimmt, besteht die Möglichkeit, neben der Adreßrechnung auch die Überwachung auf Seitenüberschreitung im Befehlsaufbereitungsprozessor durchzuführen. Bei der aus der Deutschen Patenschrift 3 215 062 bekannten Schaltung geschieht dies beispielsweise mit Hilfe eines einfachen Addierwerks, das zunächst die Summe aus Basis- und Distanzadresse bildet und dann die zugehörige Feldlänge hinzuaddiert. Zusätzlich wird mit Hilfe eines bei dieser Verknüpfung auftretenden Übertrages aus der höchstwertigen Bitstelle des Distanzadreßteils innerhalb einer Seite eine Seitenüberschreitung des entsprechenden Operanden an den Befehlsausführungsprozessor signalisiert.

Bei nicht nach dem Fließband-Prinzip arbeitenden Datenverarbeitungsanlagen, die keinen eigenen Befehlsaufbereitungsprozessor enthalten, muß eine Überprüfung auf Seitenüberschreitung im Zentralprozessor durchgeführt werden. Dies geschieht in der Weise, daß vor Beginn der eigentlichen Befehlsausführung im Addierwerk des Zentralprozessors in einem Vorspann Feldanfang und Feldende durch Addition der einzelnen Adreßkomponenten ermittelt werden. Durch anschließendes Testen der Addierwerk-Ergebnisse wird dann festgestellt, ob bei wenigstens einem Operanden eine Seitenüberschreitung stattfinden wird mit der Folge, daß dann eine Überprüfung für das Feldende erforderlich ist. Dieser Vorspann bedeutet eine entsprechende Verringerung des Befehlsdurchsatzes, insbesondere für den Fall, wenn eine Seitengrenzenüberschreitung gar nicht auftritt.

Der vorliegenden Erfindung liegt nun die Aufgabe zugrunde, für die Adreßberechnung von logischen Adressen mit bis zu drei Adreßkomponenten und für die bei SS-Befehlen erforderliche Überwachung auf eine eventuelle Seitenüberschreitung von Operand 1 und/oder Operand 2 eine möglichst einfache aber dennoch schnell arbeitende Schaltung anzugeben.

Die Lösung dieser Aufgabe ergibt sich erfindungsgemäß durch die Merkmale des Patentanspruchs 1.

Vorteilhafte Weiterbildungen der Erfindung sind in den Unteransprüchen angegeben. Durch die Vorwegaddition von Distanzadresse und Operandenlänge in der zweiten Teiladdiereinheit und durch das dazu zeitlich parallele Auslesen der Basisadresse aus dem Registersatz ergibt sich der Vorteil, daß alle Adreßkomponenten zeitgleich an der ersten Teiladdiereinheit eintreffen, so daß die Generierung einer aus drei Adreßargumenten gebildeten logischen, virtuellen Hauptspeicheradresse in einem Maschinenzyklus möglich ist. Der Vorgang "Lesen Basisadresse" geht damit zeitlich unter. Ebenfalls zeitgleich erfolgt die Überwachung in bezug auf eine eventuelle Seitengrenzenüberschreitung mit Hilfe eines zusätzlichen Addierers in Form der dritten Teiladdiereinheit.

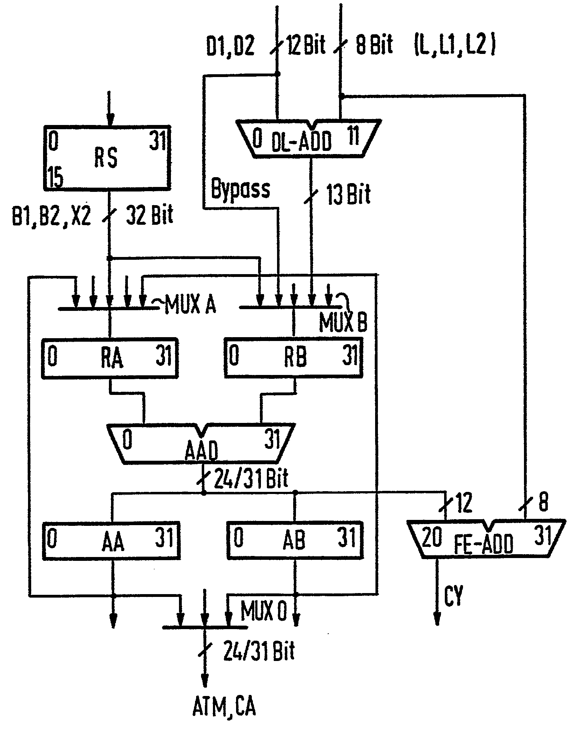

Ein Ausführungsbeispiel der Erfindung wird im folgenden anhand des in der Zeichnung dargestellten Schaltbildes näher erläutert.

Das in der Zeichnung dargestellte Adreßrechenwerk kann sowohl in sequentiell arbeitenden Prozessoren als auch in Fließband- oder Pipeline-Prozessoren eingesetzt werden. Die Schaltung enthält als erste Teiladdiereinheit einen Haupt-Adreßaddierer AAD, dem eingangsseitig zwei Eingangsregister RA, RB mit zugehörigen Eingangsmultiplexern MUX A, MUX B vorgeschaltet sind. Über diese Eingangsmultiplexer MUX A, MUX B werden die je nach Befehlstyp verschiedenartigen Adreßkomponenten selektiert und in den Eingangsregistern RA, RB zwischengespeichert. So ist beispielsweise je ein Eingang der beiden Eingangsmultiplexer MUX A, MUX B mit einem Registersatz RS verbunden, in dem die Basis- und Indexadressen der verschiedenen Operanden enthalten sind.

Dieser Registerspeicher RS umfaßt mindestens 16 Adreßregister, die durch die im jeweiligen Befehl angegebenen Vier-Bit-Adressen B1, B2, X2 adressiert werden. Da immer nur ein Adreßregister ausgelesen werden muß, kann beim Registerspeicher RS auf eine zweite Lese-Zugriffsteuerung verzichtet werden. Der Haupt-Adreßaddierer AAD kann zwei Adreßkomponenten von wahlweise 24 Bitbreite oder 31 Bitbreite (erweiterte Adressierung) aufsummieren. Ist der 24-Bit-Adressenmodus eingeschaltet, so werden die Bits 0–7 beim Addieren nicht berücksichtigt, d.h. beim Ergebnis werden in die Bitstellen 0–7 Nullen eingesetzt. Ist der 31-Bit-Adressenmodus eingeschaltet, so bleibt Bit 0 unberücksichtigt bzw. wird beim Ergebnis das Bit 0 auf Null gesetzt.

Die beiden Ausgangsregister AA und AB des Haupt-Adreßaddierers AAD nehmen die fertigen logischen, virtuellen Hauptspeicheradressen auf. Das Ausgangsregister AA wird dabei nur bei SS-Befehlen zur Zwischenspeicherung der Adresse für den ersten Speicheroperanden benutzt. Aus den beiden Ausgangsregistern AA bzw. AB werden die logischen Adressen in einem der nachfolgenden Maschinenzyklen an die Befehlsausführungseinheit übergeben. Ferner werden über einen Ausgangsmultiplexer MUX 0 in einem auf die Adreßrechnung folgenden Maschinenzyklus der Adreßumsetzungsspeicher ATM und der Pufferspeicher CA des Zentralprozessors adressiert. Die Ausgänge der beiden Ausgangsregister AA, AB werden außerdem noch über je einen Eingang des Eingangsmultiplexers MUX A auf das nachfolgende Eingangsregister RA zurückgekoppelt.

Parallel mit dem Lesen der Basisadresse aus dem Registersatz RS wird in einem 12 Bit breiten Distanz/Längen-Addierer DL-ADD, der die zweite Teiladdiereinheit bildet, bei dezimalen SS-Befehlen die jeweilige Operandenlänge L1, L2 auf die zugehörige Distanzadresse D1, D2 aufaddiert. Dies geschieht z.B. in zwei Zyklen wie folgt:

| 1. Zyklus: | D2 (12 Bit) + L2 | (4 Bit) |
|---|---|---|
| 2. Zyklus: | D1 (12 Bit) + L1 | (4 Bit) |

Das jeweilige Ergebnis (13 Bit) dieser Additionen wird unmittelbar auf den Multiplexer MUX B des Eingangsregisters RB durchgeschaltet. Bei allen anderen Befehlstypen kommt der Distanz/Längen-Addierer DL-ADD nicht zum Einsatz. Stattdessen werden die Distanzadressen D1, D2 direkt auf den Eingangsmultiplexer MUX B durchgeschaltet. Die Distanzadressen D1, D2 kommen ebenso wie die Operandenlängen L1, L2 aus einem Befehlsextrahierer, der jeweils einen Maschinenbefehl aus dem Befehlspuffer selektiert.

Als dritte Teiladdiereinheit ist ein sogenannter Feldenden-Addierer/Subtrahierer FE-ADD vorgesehen, der bei SS-Befehlen die Überwachung auf Seitengrenzenüberschreitung durchführt. Zu diesem Zweck wird einer der beiden Eingänge, der mit dem Ausgang des Haupt-Adreßaddierers AAD verbunden ist, mit den 12 niederwertigen Bits der fertigen logischen Adresse (bei 4 KByte-Seitengröße) bzw. mit den 11 niederwertigen Bits (bei zwei K-Byte- Seitengröße beschaltet. Die fertige logische Adresse zeigt bei logischen SS-Befehlen auf das linke Feldende (niedrigste Byteadresse), bei dezimalen SS-Befehlen auf das rechte Feldende (höchste Byteadresse), an dem die Verarbeitung der Befehlsoperanden jeweils zu beginnen hat. Am anderen Eingang des Feldenden-Addierers/Subtrahierers FE-AAD wird abhängig vom Befehlstyp und abhängig davon, ob gerade die erste oder die zweite Adresse berechnet wird, die entsprechende Operandenlänge zugeführt. Dabei werden folgende Rechenoperationen ausgeführt:

---

**Logische SS-Befehle:**

1. Adresse: $(AAD)_{20-31} + L = (B1) + D1 + L$

2. Adresse: $(AAD)_{20-31} + L = (B2) + D2 + L$

**Dezimale SS-Befehle:**

1. Adresse: $(AAD)_{20-31} - L1 = (B1) + D1 + L1 - L1$

2. Adresse: $(AAD)_{20-31} - L2 = (B2) + D2 + L2 - L2$

---

Zur Feststellung einer Seitengrenzenüberschreitung bei Operand 1 und/oder Operand 2 wird der bei den vorstehenden Rechenergebnissen aus der jeweils höchsten Bitstelle des Feldenden-Addierers/Subtrahierers FE-ADD resultierende Ausgangsübertrag C20 wie folgt ausgewertet:

---

| | | |
|---|---|---|
| SS-Logisch: | $C20 = 0$: | keine Seitengrenzenüberschreitung |
| | $C20 = 1$: | Seitengrenzenüberschreitung |
| SS-Dezimal: | $C20 = 1$: | keine Seitengrenzenüberschreitung |
| | $C20 = 0$: | Seitengrenzenüberschreitung |

---

Bei Verwendung von 4 KByte großen Speicherseiten ist der Übertrag C21 aus der Bitstelle 21 maßgebend.

Der Feldenden-Addierer/Subtrahierer liefert die Aussage "Seitengrenzenüberschreitung" so rasch, daß vor dem Lesen der Speicheroperanden noch in ein Sondermikroprogramm zur Abprüfung der Zugriffsbeschränkungen und zum Feststellen, ob alle Seiten definiert sind, verzweigt werden kann.

Die zweite und dritte Teiladdiereinheit, d.h. der Distanz/Längen-Addierer DLL-ADD und der Feldenden-Addierer/Subtrahierer FE-ADD werden zweckmäßigerweise in einem LSI-Schaltkreis zusammengefaßt. Da die beiden 12 Bit-Addierer mit dem gleichen Längencode und den gleichen Steuersignalen beschaltet werden, sind maximal nur 55 Logik-Pins erforderlich.

Die bei den einzelnen Befehlstypen in Betracht kommenden Adreßgenerierungsmöglichkeiten sind in der nachfolgenden Tabelle zusammengestellt.

Tabelle

| Befehlstyp | DL-ADD | ADD | FE-ADD | Log. Adresse in |
|---|---|---|---|---|
| RX (X2=0) | Bypass | (B2) + D2 | – | AB |
| RX (B2 = 0) | Bypass | (X2) + D2 | – | AB |
| RX (B2/X2≠0 | | | | |
| 1. Zyklus | Bypass | (B2) + D2 | – | (AB) |
| 2. Zyklus | – | (AB) + (X2) | – | AB |
| RS | Bypass | (B2) + D2 | – | AB |
| SI | Bypass | (B1) + D1 | – | AB |
| SS (Log.) | | | | |
| 1. Zyklus | Bypass | (B2) + D2 | + L | AB (ADR2) |
| 2. Zyklus | Bypass | (B1) + D1 | + L | AA (ADR1) |
| SS (Dez.) | | | | |
| 1. Zyklus | ZE = D2 + L2 | (B2) + ZE | – L2 | AB (ADR2) |
| 2. Zyklus | ZE = D1 + L1 | (B1) + ZE | – L1 | AA (ADR1) |
| ZE = Zwischenergebnis | | | | |

Für den Register-Register-Befehl (RR-Befehl) muß keine Hauptspeicheradresse gebildet werden. Dieser Befehlstyp ist deshalb in der Tabelle nicht enthalten. Für die Befehlstypen RX, RS (Register-Speicher-Befehle) und SI (Speicher-Direktoperanden-Befehle) wird nur eine Hauptspeicheradresse gebildet. Dabei ist weder der Distanz/Längen-Addierer DL-ADD noch der Feldenden-Addierer/Subtrahierer FE-ADD in Betrieb. Für die Befehlstypen RS, SI und RX mit X2 = 0 oder B2 = 0 werden die logische, virtuelle Hauptspeicheradresse im Haupt-Adreß- Addierer AAD in einem Maschinenzyklus generiert. Beim Befehlstyp RX mit B2 0 und X2 0 erfolgt die Berechnung der logischen Adresse in zwei aufeinanderfolgenden Zyklen. Im ersten Zyklus wird die Basisadresse (B2) aus dem Registerspeicher RS mit der Distanzadresse D2 aus dem Befehlspuffer summiert und das Zwischenergebnis über das Ausgangsregister AB und den Eingangsmultiplexer MUX A auf das Eingangsregister RA zurückgekoppelt. Im zweiten Zyklus wird dann das Zwischenergebnis (B2) + D2 aus dem Eingangsregister RA mit der Indexadresse X2, die aus dem Registerspeicher über den Eingangsmultiplexer MUX B an das zweite Eingangsregister RB gelangt, summiert und das endgültige Ergebnis im Ausgangsregister AB abgespeichert. Durch diese Vorgehensweise kann ein aufwendiger 3-Operanden- Addierer vermieden werden.

Obwohl beim SS-Befehl zwei logische Adressen generiert werden müssen, ist mit Hilfe der in der Figur dargestellten Schaltung auch hier eine Generierung in zwei aufeinanderfolgenden Zyklen möglich. Die Reihenfolge der Generierung der beiden logischen Adressen ist dabei ohne Bedeutung. Im einzelnen ergibt sich z.B. für die Bildung der ersten Operandenadresse eines dezimalen SS-Befehls innerhalb eines einzigen Zyklus folgender Ablauf. In einem ersten Schritt wird im Distanz/Längen-Addierer ADD aus Distanzadresse D1 und Operandenlänge L1 ein Zwischenergebnis ZE gebildet. Gleichzeitig wird die zugehörige Basisadresse auf (B1) aus dem Registerspeicher RS gelesen. Im zweiten Schritt erfolgt die Addition von Zwischenergebnis ZE und Basisadresse (B1) im Haupt-Adressenaddierer AAD. Im dritten Schritt schließlich erfolgt die Übergabe der so errechneten logischen Adresse über das Ausgangsregister AA und den Multiplexer MUX 0 an den Adreßumsetzungsspeicher ATM und an den Pufferspeicher CA des Zentralprozessors. Gleichzeitig mit dem dritten Schritt erfolgt im Feldenden-Addierer/Subtrahierer FE-ADD eine Überwachung auf Seitengrenzenüberschreitung derart, daß vom Ergebnis des Haupt-Adreßaddierers AAD, wobei nur die Bits 20 bis 31 bzw. bei 2 KByte großen Speicherseiten die Bits 21 bis 31 in Betracht kommen, die zugehörige Operandenlänge L1 subtrahiert wird.

**Patentansprüche**

1. Schaltungsanordnung zur befehlstypabhängigen Berechnung von Operandenadressen und zur Prüfung der Seitengrenzenüberschreitung bei Operanden für logische oder dezimale Speicher-Speicher-Befehle in einer Datenverarbeitungsanlage mit einem in Seiten gleicher Größe unterteilten Speichersystem, unter Verwendung eines Adreßrechenwerks, das durch Summierung von Basis- und Distanzadresse sowie der Feldlänge des jeweils ersten bzw. zweiten Operanden mit Hilfe eines auftretenden Übertrages aus der höchstwertigen Bitstelle des Distanzadreßteils eine Seitengrenzenüberschreitung des entsprechenden Operanden signalisiert, dadurch gekennzeichnet, daß das Adreßwerk aus drei Teiladdiereinheiten besteht, die wie folgt miteinander verknüpft sind:

a) ein die erste Teiladdiereinheit bildender Hauptadreßaddierer (AAD) ist über ein erstes und zweites Eingangsregister (RA, RB) mit zugehörigem ersten und zweiten Eingangsmultiplexer (MUX A, MUX B) einerseits mit einem die Basis- bzw. Indexadressen (B1, B2, X2) der einzelnen Operanden enthaltenden Registersatz (RS) und andererseits mit einem Befehlspuffer zur Einspeisung der zugehörigen Distanzadresse (D1, D2) verbunden;

b) als zweite Teiladdiereinheit ist ein Distanz/Längen-Addierer (DI-ADD) vorgesehen, an dessen beiden Eingängen die jeweils zugehörigen Distanzadressen (D1, D2) und Operandenlängen (L, L1, L2) aus dem Befehlspuffer zugeführt sind und dessen Ausgang über einen weiteren Eingang des zweiten Eingangsmultiplexers (MUX B) mit dem zweiten Eingangsregister (RB) der ersten Teiladdiereinheit verknüpft ist;

c) die dritte Teiladdiereinheit ist ein Feldlängen-Addierer/Subtrahierer (FE-ADD), der mit seinem ersten Eingang mit dem Ausgang der ersten Teiladdiereinheit (AAD) verbunden ist, an dessen zweitem Eingang die Operandenlänge (L, L1, L2) aus dem Befehlspuffer zugeführt ist und an dessen Übertragsausgang ein im Fall einer Seitengrenzenüberschreitung auftretendes Steuersignal (CY) abgreifbar ist.

2. Schaltungsanordnung nach Anspruch 1, dadurch gekennzeichnet, daß der erste Eingangsmultiplexer (MUX A) eingangsseitig mit dem Ausgang eines ersten Ausgangsregisters (AA) des Haupt-Adreßaddierers (AAD), mit dem Ausgang des Registerspeichers (RS) zur Einspeisung der Basisadressen (B1, B2) und mit dem Ausgang eines zweiten Ausgangsregisters (AB) des Haupt-Adreßaddierers (AAD) verbunden ist und daß der zweite Eingangsmultiplexer (MUX B) eingangsseitig mit dem Ausgang des Registerspeichers (RS) zur Einspeisung der Indexadressen (X2), mit dem Befehlspuffer zur Einspeisung der Distanzadressen (D1, D2) und mit dem Ausgang des Distanz/Längen-Addierers (DL-ADD) verbunden ist.

3. Schaltungsanordnung nach Anspruch 2, dadurch gekennzeichnet, daß die Ausgänge der beiden Ausgangsregister (AA, AB) des Haupt-Adreßaddierers (AAD) über einen Ausgangsmultiplexer (MUX 0) mit den Adreßeingängen eines Adreßumsetzungsspeichers (ATM) und eines Pufferspeichers (CA) verbunden sind.

## Claims

1. Circuit arrangement for the instruction-dependent calculation of operand addresses and for checking the page boundary crossing at operands for logical or decimal storage-to-storage instructions in a data processing system with a storage system subdivided into pages of equal size, using an address arithmetic unit which, by summation of base address and displacement address and the field length of the first and second operand respectively in each case, signals with the aid of a carry occurring from the most significant bit position of the displacement address part a page boundary crossing of the corresponding operand, characterized in that the address arithmetic unit consists of three sub-adding units, which are linked to one another as follows:

a) a main address adder (AAD), forming the first sub-adding unit, is connected via a first and second input register (RA, RB) with associated first and second input multiplexer (MUX A, MUX B) on the one hand to a register set (RS), containing the base or index addresses (B1, B2, X2) of the individual operands, and on the other hand to an instruction buffer for feeding of the associated displacement address (D1, D2);

b) as second sub-adding unit, a displacement/length adder (DL-ADD) is provided, to the two inputs of which the respectively associated displacement addresses (D1, D2) and operand lengths (L, L1, L2) are fed from the instruction buffer and the output of which is linked via a further input of the second input multiplexer (MUX B) to the second input register (RB) of the first sub-adding unit;

c) the third sub-adding unit is a field-length adder/subtracter (FE-ADD), which is connected by its first input to the output of the first sub-adding unit (AAD), to the second input of which the operand length (L, L1, L2) is fed from the instruction buffer and at the carry output of which a control signal (CY), occurring in the event of a page boundary crossing, can be picked off.

2. Circuit arrangement according to Claim 1, characterized in that the first input multiplexer (MUX A) is connected on the input side to the output of a first output register (AA) of the main address adder (AAD), to the output of the register memory (RS) for feeding of the base addresses (B1, B2) and to the ouput of a second output register (AB) of the main address adder (AAD) and in that the second input multiplexer (MUX B) is connected on the input side to the output of the register memory (RS) for feeding of the index addresses (X2), to the instruction buffer for feeding of the displacement addresses (D1, D2) and to the output of the displacement/length adder (DL-ADD).

3. Circuit arrangement according to Claim 2, characterized in that the outputs of the two output registers (AA, AB) of the main address adder (AAD) are connected via an output multiplexer (MUX O) to the address inputs of an address translation memory (ATM) and of a buffer memory (CA).

**Revendications**

1. Montage pour calculer, en fonction du type d'instruction, des adresses d'opérandes et pour contrôler le dépassement de limites de pages dans le cas d'opérandes pour des instructions mémoire-mémoire logiques ou décimales dans une installation de traitement de données comportant un système de mémoire subdivisé en pages de même taille, moyennant l'utilisation d'une unité de calcul d'adresses, qui signale, par sommation d'une adresse de base et d'une adresse de distance ainsi que de la longueur de la zone du premier ou du second opérande respectif, à l'aide d'un report apparaissant à partir de la position binaire de poids maximum de la partie formant l'adresse de distance, un dépassement d'une limite de page par l'opérande correspondant, caractérisé par le fait que l'unité de calcul d'adresses est constituée par trois unités d'addition partielle, qui sont combinées entre elles de la manière suivante:

a) un additionneur principal d'adresses (AAD), constituant la première unité d'addition partielle, est relié, par l'intermédiaire de premier et second registres d'entrée (RA, RB), auxquels sont associés des premier et second multiplexeurs d'entrée (MUX A, MUX B), d'une part, à un ensemble (RS) de registres contenant les adresses de base ou d'index (B1, B2, X2) des différents opérandes, et, d'autre part, à un tampon d'instructions servant à mémoriser l'adresse associée de distance (D1, D2);

b) comme seconde unité d'addition partielle il est prévu un additionneur de distances/longueurs (DL-ADD), aux deux entrées duquel sont envoyées les adresses respectives associées de distance (D1, D2) et les longueurs respectives associées d'opérandes (L, L1, L2), tirées du tampon d'instructions, et dont la sortie est reliée par l'intermédiaire d'une autre entrée du second multiplexeur d'entrée (MUX B), au second registre d'entrée (RB) de la première unité d'addition partielle; et

c) la troisième unité d'addition partielle est un additionneur/soustracteur de longueurs de zones (FE-ADD), qui est relié par sa première entrée à la sortie de la première unité d'addition partielle (AAD), et à la seconde entrée duquel est envoyée la longueur (L, L1, L2) de l'opérande, tirée du tampon d'instruction et à la sortie de report duquel peut être prélevé un signal de commande (CY), qui apparaît dans le cas d'un dépassement d'une limite de page.

2. Montage suivant la revendication 1, caractérisé par le fait que le premier multiplexeur d'entrée (MUX A) est raccordé par son entrée à la sortie d'un premier registre de sortie (AA) de l'additionneur principal d'adresses (AAD), à la sortie de la mémoire à registres (RS) servant à mémoriser les adresses de base (B1, B2) et à la sortie du second registre de sortie (AB) de l'additionneur principal d'adresses (AAD), et que le second multiplexeur d'entrée (MUX B) est relié, par son entrée, à la sortie de la mémoire à registres (RS) servant à mémoriser les adresses d'index (X2), à la mémoire d'instructions servant à mémoriser les adresses de distance (D1, D2) et à la sortie de l'additionneur de distances/longueurs (DL-ADD).

3. Montage suivant la revendication 2, caractérisé par le fait que les sorties des deux registres de sortie (AA, AB) de l'additionneur principal d'adresses (AAD) sont reliées, au moyen d'un multiplexeur de sortie (MUX O), aux entrées d'adresses d'une mémoire de conversion d'adresses (ATM) et d'une mémoire tampon (CA).